# EUROPEAN PATENT APPLICATION

(11) **EP 3 462 208 A1**
(43) Date of publication of application: **03.04.2019**
(21) Application number: 18183500.0
(22) Date of filing: 13.07.2018
(51) Int. Cl.: G01S 7/40, G01S 13/04, G01S 13/56, G08B 13/24, G08B 29/22

(54) **SYSTEMS AND METHODS FOR SELF-ADJUSTING A MONITORING PATTERN RANGE OF A MICROWAVE SENSING DEVICE**

(30) Priority: 28.09.2017 US 201715718264
(71) Applicant: Honeywell International Inc., Morris Plains, NJ New Jersey 07950 (US)
(72) Inventor: ZHAO, TianFeng, Morris Plains, NJ New Jersey 07950 (US); LI, Huayu, Morris Plains, NJ New Jersey 07950 (US); QIN, Lei, Morris Plains, NJ New Jersey 07950 (US)
(74) Representative: Houghton, Mark Phillip

(57) **Abstract**

Some systems for self-adjusting a monitoring pattern range of a microwave sensing device can include a microcontroller coupled to the microwave sensing device, an antenna of the microwave sensing device, signal processing circuitry of the microwave sensing device coupled to the antenna, and a digital potentiometer of the microwave sensing device coupled to the signal processing circuitry. The antenna can detect an object and transmit an object detection signal to the signal processing circuitry for processing thereof, and the microprocessor can sample a processed microwave intermediate frequency signal output from the signal processing circuitry, determine a monitoring pattern range of the microwave sensing device responsive thereto, and transmit an adjustment signal to the digital potentiometer to adjust a gain of a microwave intermediate frequency of the signal processing circuitry to adjust the monitoring pattern range by increasing or decreasing a detection sensitivity level of the microwave sensing device.

## Description

### FIELD

The present invention relates generally to microwave sensing devices. More particularly, the present invention relates to systems and methods for self-adjusting a monitoring pattern range of a microwave sensing device.

### BACKGROUND

Motion detectors that include microwave sensing devices are known in the art. It is also known in the art that a monitoring pattern range of a microwave sensing device must be adjusted based on an environment in which the microwave sensing device is installed because detection performance of the microwave sensing device relies on factors in the environment, such as room size, construction, wall material, temperature, electromagnetism interference, and the like.

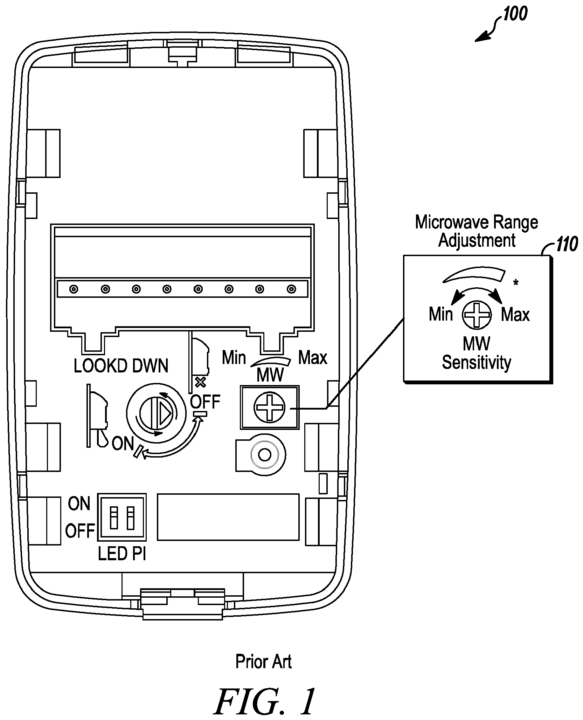

Known systems and methods to adjust the monitoring pattern range of the microwave sensing device include manually adjusting a gain of circuitry in the microwave sensing device through a potentiometer to achieve an acceptable detection sensitivity level. For example, as seen in FIG. 1, a motion detector 100 that includes a microwave sensing device known in the art can include a user input device 110 that can receive manual user input to cause a potentiometer to adjust the gain of the circuitry in the microwave sensing device, thereby increasing or decreasing the detection sensitivity level of the motion detector 100. However, such known systems and methods involve several rounds of manual trial and error, which can waste time and money and be inconvenient to a user, especially when the microwave sensing device is installed on or near a ceiling of a room. For example, the user may need to climb up a ladder to install the microwave sensing device, power on the microwave sensing device, climb down the ladder, test the monitoring pattern range, climb up the ladder to manually adjust the detection sensitivity level, climb down the ladder, re-test the monitoring pattern range, and so forth.

In view of the above, there is a continuing, ongoing need for improved systems and methods.

### BRIEF DESCRIPTION OF THE DRAWINGS

FIG. 1 is a block diagram of a motion detector that includes a microwave sensing device known in the art;
FIG. 2 is a block diagram of a motion detector that includes a microwave sensing device in accordance with disclosed embodiments;
FIG. 3 is a flow diagram of a method in accordance with disclosed embodiments;
FIG. 4A is a perspective view of a user walking along an edge of a desired monitoring pattern range of a monitoring area of a motion detector that includes a microwave sensing device in accordance with disclosed embodiments;
FIG. 4B is side view of a desired monitoring pattern range of a monitoring area of a motion detector that includes a microwave sensing device in accordance with disclosed embodiments; and
FIG. 4C is a top view of a user walking along an edge of a desired monitoring pattern range of a monitoring area of a motion detector that includes a microwave sensing device in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for self-adjusting a monitoring pattern range of a microwave sensing device. That is, systems and methods disclosed herein can self-calibrate the monitoring pattern range and a detection sensitivity level of the microwave sensing device.

In accordance with disclosed embodiments, the microwave sensing device can detect more than just motion of an object within range of the microwave sensing device. For example, in some embodiments, the microwave sensing device can detect a position of the object within the range of the microwave sensing device, a distance of the object from the microwave sensing device, a direction of the object when moving within the range of the microwave sensing device, or a speed of the object when moving within the range of the microwave sensing device.

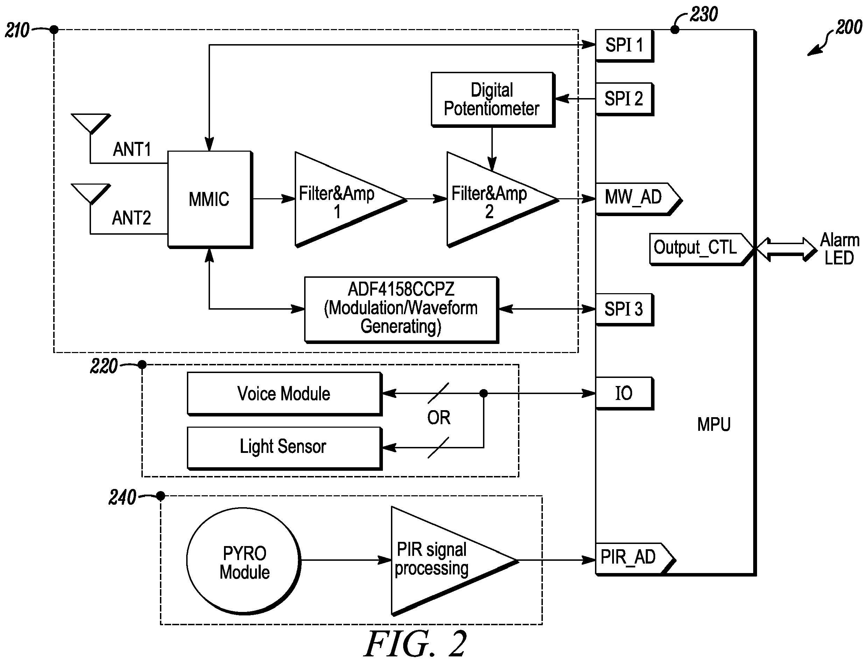

FIG. 2 is a block diagram of a motion detector 200 that includes a microwave sensing device 210 in accordance with disclosed embodiments. As seen in FIG. 2, the motion detector 200 can include the microwave sensing device 210, a user input/output device 220, and a PIR device 240 each of which can be coupled to a microcontroller or microprocessor 230.

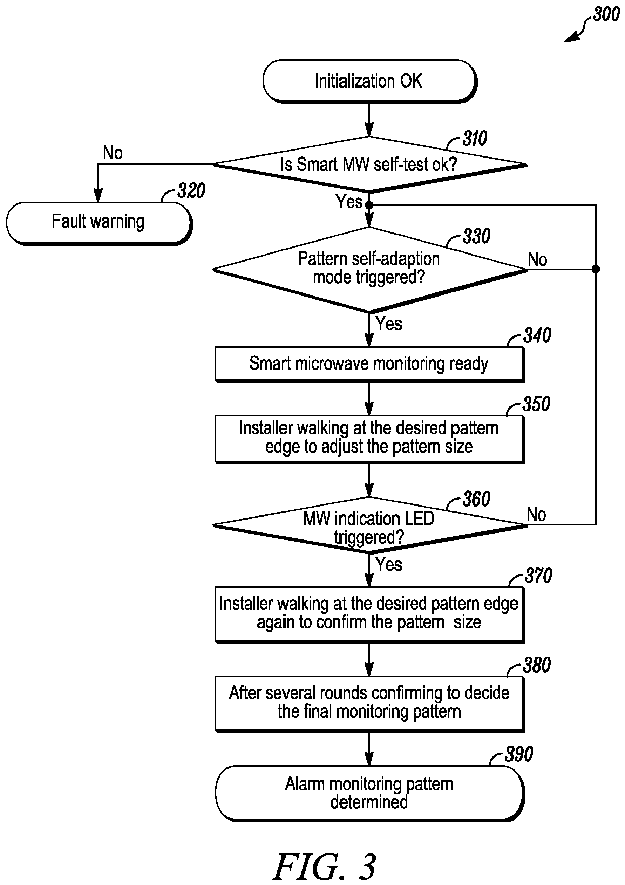

In some embodiments, the microwave sensing device 240 can include a monolithic microwave integrated circuit (MMIC), modulation/waveform generating circuitry, signal processing circuitry, and a digital potentiometer. In some embodiments, the microcontroller 230 can control the modulation/waveform generating circuitry by transmitting a VCO control signal to the modulation/waveform generating circuitry to drive the MMIC. Furthermore, in some embodiments, antennas of the microwave sensing device 210 can detect an object within the range of the microwave sensing device 210 and transmit an object detection signal to the signal processing circuitry for processing thereof. Further still, in some embodiments, the microcontroller 230 can sample a processed microwave intermediate frequency signal output from the signal processing circuitry and, responsive thereto, determine the monitoring pattern range of the microwave sensing device 210 as described in connection with the method 300 of FIG. 3. Even further, in some embodiments, the microcontroller 230 can determine when the monitoring pattern range needs adjustment and, responsive thereto, can control the digital potentiometer by transmitting an adjustment signal to the digital potentiometer to adjust a gain of a microwave intermediate frequency of the signal processing circuitry, thereby increasing or decreasing the detection sensitivity level of the microwave sensing device 210.

In some embodiments, the user input/output device 220 can include a microphone for receiving a voice command and a LED for activating to provide a notification to a user. For example, the user input/output device 220 can receive the voice command instructing the microwave sensing device 210 to enter a test mode for adjusting the monitoring pattern range of the microwave sensing device 210 and, responsive thereto, transmit a corresponding signal to the microcontroller 230, which can transmit an instruction signal to the microwave sensing device 210 to enter the test mode. Accordingly, in some embodiments, the user need not physically or manually engage the microwave sensing device 210 or the motion detector 200 to adjust the monitoring pattern range thereof.

FIG. 3 is a flow diagram of a method 300 in accordance with disclosed embodiments. As seen in FIG. 3, the method 300 can include determining whether a self-test of the microwave sensing device 210 passes as in 310. If not, then the method 300 can include activating a fault warning as in 320.

However, when the method 300 determines that the self-test of the microwave sensing device 210 passes as in 310, the method 300 can include determining whether the test mode for adjusting the monitoring pattern range of the microwave sensing device 210 has been triggered, for example, responsive to user input, as in 330. If not, then the method 300 can continue determining whether the test mode has been triggered as in 330.

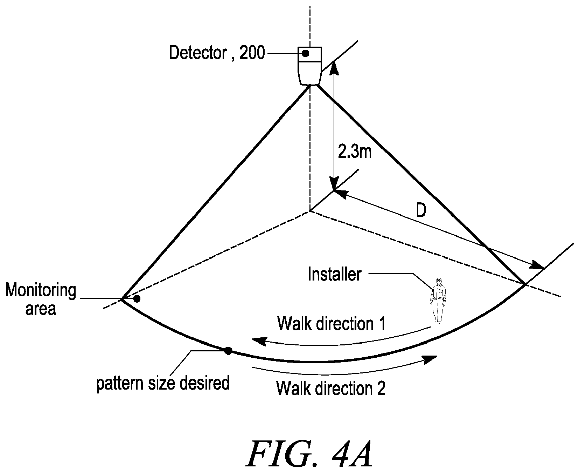

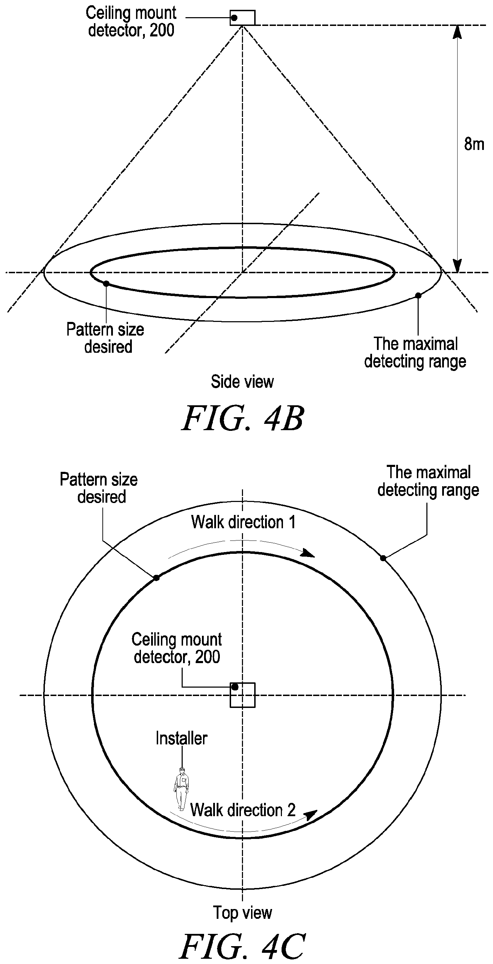

However, when the method 300 determines that the test mode has been triggered as in 330, the method 300 can include readying the microwave sensing device as in 340. Then, as best seen in FIGs. 4A-4C, the user can walk along an edge of a desired monitoring pattern range of a monitoring area of the microwave sensing device 210 in a first direction as in 350. The antennas of the microwave sensing device 210 can detect the user and transmit the object detection signal to the signal processing circuitry of the microwave sensing device 210 for processing thereof. Then, the microcontroller can sample the processed microwave intermediate frequency signal output from the signal processing circuitry, determine the monitoring pattern range of the microwave sensing device 210 responsive thereto, determine when the monitoring pattern range needs adjustment, and, responsive thereto, control the digital potentiometer of the microwave sensing device 210 by transmitting the adjustment signal to the digital potentiometer to adjust the gain of the microwave intermediate frequency of the signal processing circuitry, thereby increasing or decreasing the detection sensitivity level of the microwave sensing device 210. When the microcontroller either determines that the monitoring pattern range of the microwave sensing device 210 does not need adjustment or that the detection sensitivity level of the microwave sensing device 210 has been adjusted as needed, the method 300 can include triggering activation of the LED of the user input/output device 220 as in 360 to notify the user that the monitoring pattern range or the detection sensitivity level of the microwave sensing device 210 is acceptable.

As seen in FIG. 3, when the method 300 does not trigger activation of the LED as in 360, the method 300 can continue determining whether the test mode has been triggered as in 330. However, after the method 300 triggers activation of the LED as in 360 and as best seen in FIGs. 4A-4C, the user can walk along the edge of the desired monitoring pattern range of the microwave sensing device 210 in a second direction that is opposite the first direction as in 370. Repeating as necessary, the antennas of the microwave sensing device 210 can detect the user and transmit the object detection signal to the signal processing circuitry of the microwave sensing device 210 for processing thereof, and the microcontroller can sample the processed microwave intermediate frequency signal output from the signal processing circuitry, determine the monitoring pattern range of the microwave sensing device 210 responsive thereto, determine when the monitoring pattern range needs adjustment, and, responsive thereto, control the digital potentiometer of the microwave sensing device 210 by transmitting the adjustment signal to the digital potentiometer to adjust the gain of the microwave intermediate frequency of the signal processing circuitry, thereby increasing or decreasing the detection sensitivity level of the microwave sensing device 210. In this manner, the method 300 can include finalizing the monitoring pattern range of the microwave sensing device 210 as in 380 and determining the monitoring pattern range of the microwave sensing device 210 as in 390.

Systems and methods are disclosed herein in connection with a motion detector that includes a microwave sensing device. However, it is to be understood that embodiments disclosed herein are not so limited and can be used in connection with any video control system, lighting control system, industrial control system, and the like that includes the microwave sensing device and microcontroller as disclosed herein.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

The numbered paragraphs below form part of the disclosure:
1. A system comprising:
   a microwave sensing device;
   a microcontroller coupled to the microwave sensing device;
   an antenna of the microwave sensing device;
   signal processing circuitry of the microwave sensing device coupled to the antenna; and
   a digital potentiometer of the microwave sensing device coupled to the signal processing circuitry,
   wherein the antenna detects an object and transmits an object detection signal to the signal processing circuitry for processing thereof,
   wherein the microprocessor samples a processed microwave intermediate frequency signal output from the signal processing circuitry and, responsive thereto, determines a monitoring pattern range of the microwave sensing device, and
   wherein the microprocessor transmits an adjustment signal to the digital potentiometer to adjust a gain of a microwave intermediate frequency of the signal processing circuitry to adjust the monitoring pattern range of the microwave sensing device by increasing or decreasing a detection sensitivity level of the microwave sensing device.
2. The system of 1 wherein the microwave sensing device detects a position of the object.
3. The system of 1 or 2 wherein the microwave sensing device detects a distance of the object from the microwave sensing device.
4. The system of any of 1 to 3 wherein the microwave sensing device detects a direction of the object when moving.
5. The system of any of 1 to 4 wherein the microwave sensing device detects a speed of the object when moving.
6. The system of any of 1 to 5 further comprising:
   an integrated circuit of the microwave sensing device coupled to the signal processing circuitry; and
   modulation/waveform generating circuitry of the microwave sensing device coupled to the integrated circuit,
   wherein the microcontroller transmits a control signal to the modulation/waveform generating circuitry to drive the integrated circuit.
7. The system of any of 1 to 6 further comprising a user input device coupled to the microcontroller, wherein the user input device receives user input instructing the microwave sensing device to enter a test mode for adjusting the monitoring pattern range.
8. The system of any of 1 to 7 further comprising a user output device coupled to the microcontroller, wherein the user output device provides a notification of the monitoring pattern range or the detection sensitivity level being acceptable.
9. The system of any of 1 to 8 wherein the microprocessor adjusts the gain of the microwave intermediate frequency of the signal processing circuitry to adjust the monitoring pattern range of the microwave sensing device by increasing or decreasing the detection sensitivity level of the microwave sensing device without user intervention.
10. The system of any of 1 to 9 wherein the microwave sensing device and the microcontroller are part of a motion detector.
11. A method comprising:
   an antenna of a microwave sensing device detecting an object and transmitting an object detection signal to signal processing circuitry of the microwave sensing device coupled to the antenna for processing thereof;
   a microprocessor coupled to the microwave sensing device sampling a processed microwave intermediate frequency signal output from the signal processing circuitry and, responsive thereto, determining a monitoring pattern range of the microwave sensing device; and
   the microprocessor transmitting an adjustment signal to a digital potentiometer of the microwave sensing device coupled to the signal processing circuitry to adjust a gain of a microwave intermediate frequency of the signal processing circuitry to adjust the monitoring pattern range of the microwave sensing device by increasing or decreasing a detection sensitivity level of the microwave sensing device.
12. The method of 11 further comprising the microwave sensing device detecting a position of the object.
13. The method of 11 to 12 further comprising the microwave sensing device detecting a distance of the object from the microwave sensing device.
14. The method of 11 to 13 further comprising the microwave sensing device detecting a direction of the object when moving.
15. The method of 11 to 14 further comprising the microwave sensing device detecting a speed of the object when moving.
16. The method of 11 to 15 further comprising the microcontroller transmitting a control signal to modulation/waveform generating circuitry of the microwave sensing device to drive an integrated circuit of the microwave sensing device coupled to the signal processing circuitry.
17. The method of 11 to 16 further comprising a user input device coupled to the microcontroller receiving user input instructing the microwave sensing device to enter a test mode for adjusting the monitoring pattern range.
18. The method of 11 to 17 further comprising a user output device coupled to the microcontroller providing a notification of the monitoring pattern range or the detection sensitivity level being acceptable.
19. The method of 11 to 18 further comprising the microprocessor adjusting the gain of the microwave intermediate frequency of the signal processing circuitry to adjust the monitoring pattern range of the microwave sensing device by increasing or decreasing the detection sensitivity level of the microwave sensing device without user intervention.
20. The method of 11 to 19 wherein the microwave sensing device and the microcontroller are part of a motion detector.

## Claims

**1.** A system comprising:
a microwave sensing device;
a microcontroller coupled to the microwave sensing device;
an antenna of the microwave sensing device;
signal processing circuitry of the microwave sensing device coupled to the antenna; and
a digital potentiometer of the microwave sensing device coupled to the signal processing circuitry,
wherein the antenna detects an object and transmits an object detection signal to the signal processing circuitry for processing thereof,
wherein the microprocessor samples a processed microwave intermediate frequency signal output from the signal processing circuitry and, responsive thereto, determines a monitoring pattern range of the microwave sensing device, and
wherein the microprocessor transmits an adjustment signal to the digital potentiometer to adjust a gain of a microwave intermediate frequency of the signal processing circuitry to adjust the monitoring pattern range of the microwave sensing device by increasing or decreasing a detection sensitivity level of the microwave sensing device.

**3.** The system of claim 1 wherein the microwave sensing device detects a position of the object.

**2.** The system of claim 1 or claim 2 wherein the microwave sensing device detects a distance of the object from the microwave sensing device.

**4.** The system of any of claims 1 to 3 wherein the microwave sensing device detects a direction of the object when moving.

**5.** The system of any of claims 1 to 4 wherein the microwave sensing device detects a speed of the object when moving.

**6.** The system of any of claims 1 to 5 further comprising:
an integrated circuit of the microwave sensing device coupled to the signal processing circuitry; and
modulation/waveform generating circuitry of the microwave sensing device coupled to the integrated circuit,
wherein the microcontroller transmits a control signal to the modulation/waveform generating circuitry to drive the integrated circuit.

**7.** The system any of claims 1 to 6 further comprising a user input device coupled to the microcontroller, wherein the user input device receives user input instructing the microwave sensing device to enter a test mode for adjusting the monitoring pattern range.

**8.** The system of any of claims 1 to 7 further comprising a user output device coupled to the microcontroller, wherein the user output device provides a notification of the monitoring pattern range or the detection sensitivity level being acceptable.

**9.** The system of any of claims 1 to 8 wherein the microprocessor adjusts the gain of the microwave intermediate frequency of the signal processing circuitry to adjust the monitoring pattern range of the microwave sensing device by increasing or decreasing the detection sensitivity level of the microwave sensing device without user intervention.

**10.** The system of any of claims 1 to 9 wherein the microwave sensing device and the microcontroller are part of a motion detector.

**11.** A method comprising:
an antenna of a microwave sensing device detecting an object and transmitting an object detection signal to signal processing circuitry of the microwave sensing device coupled to the antenna for processing thereof;
a microprocessor coupled to the microwave sensing device sampling a processed microwave intermediate frequency signal output from the signal processing circuitry and, responsive thereto, determining a monitoring pattern range of the microwave sensing device; and
the microprocessor transmitting an adjustment signal to a digital potentiometer of the microwave sensing device coupled to the signal processing circuitry to adjust a gain of a microwave intermediate frequency of the signal processing circuitry to adjust the monitoring pattern range of the microwave sensing device by increasing or decreasing a detection sensitivity level of the microwave sensing device.

**13.** The method of claim 11 or claim 12 further comprising the microwave sensing device detecting a position of the object.

**12.** The method of claim 11 further comprising the microwave sensing device detecting a distance of the object from the microwave sensing device.

**14.** The method of any of claims 11 to 13 further comprising the microwave sensing device detecting a direction of the object when moving.

**15.** The method of any of claims 11 to 14 further comprising the microwave sensing device detecting a speed of the object when moving.
